# DEMANDE DE BREVET EUROPEEN

(11) **EP 4 686 034 A1**
(43) Date de publication de la demande: **28.01.2026**
(21) Numéro de dépôt: 25190818.2
(22) Date de dépôt: 21.07.2025
(51) Int. Cl.: H02J 3/14, B60L 53/63, H02J 3/32, H02J 7/02, B60L 55/00

(54) **PROCÉDÉ ET DISPOSITIF DE GESTION DE LA PUISSANCE ÉLECTRIQUE CONSOMMÉE PAR UN DISPOSITIF DE CONSOMMATION INTELLIGENT ASSOCIÉ À UN GESTIONNAIRE D'ÉNERGIE DANS UN BATIMENT**

(30) Priorité: 26.07.2024 FR 2408298
(71) Demandeur: DELTA DORE, 35270 Bonnemain (FR)
(72) Inventeur: LE TUTOUR, Jean, 35270 BONNEMAIN (FR); ABREU DE OLIVEIRA, Amanda, 35270 BONNEMAIN (FR)
(74) Mandataire: Cabinet Le Guen Maillet

(57) **Abrégé**

La présente invention concerne un procédé et un dispositif de gestion de la puissance électrique consommée par un dispositif de consommation intelligent dans un bâtiment comportant le dispositif de consommation intelligent et un gestionnaire d'énergie.

les étapes, exécutées par le dispositif de consommation intelligent, de :
- détermination (E303) de la puissance électrique disponible avant qu'une interruption de la fourniture de l'énergie électrique au bâtiment n'apparaisse,
- utilisation (E306), pendant une première durée prédéterminée, de la valeur maximale de puissance électrique que peut fournir le compteur électrique avant une disjonction,
- utilisation (E310), pendant une seconde durée prédéterminée, d'une puissance électrique inférieure à la valeur maximale de puissance électrique que peut fournir le compteur électrique avant une disjonction,
- réitération des étapes (E303, E306, E310) d'utilisation et de détermination à l'issue de la seconde période prédéterminée.

## Description

### DOMAINE TECHNIQUE

La présente invention concerne un procédé et dispositif de gestion de la puissance électrique consommée par un dispositif de consommation intelligent associé à un gestionnaire d'énergie dans un bâtiment.

### ETAT DE LA TECHNIQUE ANTERIEURE

Classiquement la puissance électrique consommée dans un bâtiment provient en grande partie d'un réseau de fourniture d'énergie électrique. L'énergie électrique du réseau de fourniture en énergie électrique est délivrée au bâtiment par l'intermédiaire d'un compteur qui mesure la puissance délivrée par le réseau de fourniture en énergie électrique au bâtiment et lorsque la puissance est supérieure à celle prévue pour le bâtiment, provoque une interruption de la fourniture de l'énergie électrique au bâtiment. Cette interruption est appelée disjonction.

De nouveau dispositifs consommateurs en énergie électrique apparaissent dans les bâtiments, ces dispositifs sont appelés par la suite dispositifs de consommation intelligents. Les dispositifs de consommation intelligents sont aptes à augmenter ou réduire leur puissance électrique consommée en fonction de la puissance électrique disponible avant qu'une disjonction n'apparaisse.

Ces dispositifs de consommation intelligents sont par exemple des bornes de recharge de véhicules électriques ou des systèmes de climatisation ou des pompes à chaleur.

Il existe des gestionnaires d'énergie pour le chauffage électrique ou le chauffage eau chaude (chaudière, pompe à chaleur, poêle à granulés...). Les gestionnaires d'énergie électrique regroupent plusieurs fonctions pour optimiser la consommation en énergie d'un habitat. Il assure une température constante et confortable selon les heures de la journée et les zones du logement grâce à des fonctions de programmation et de délestage. Les gestionnaires d'énergie se révèlent être des appareils complets et efficaces pour piloter les installations de chauffage ou de climatisation tout en faisant des économies d'énergie.

Les gestionnaires d'énergie commandent ainsi le fonctionnement de divers appareils électriques en s'assurant que la puissance électrique totale consommée soit inférieure à la puissance électrique prévue pour le bâtiment et prennent en compte les différentes tarifications horaires de manière à réduire le coût financier de la facturation effectuée par l'opérateur du réseau de fourniture en énergie électrique.

Lorsqu'un bâtiment comporte un dispositif de consommation intelligent et un gestionnaire d'énergie des problèmes apparaissent.

Par exemple, si le dispositif de consommation intelligent est informé d'une puissance électrique totale consommée par le bâtiment est inférieure à la puissance électrique prévue pour le bâtiment, celui-ci peut augmenter la puissance électrique délivrée au véhicule. Le gestionnaire d'énergie voyant que la puissance totale consommée par le bâtiment est quasiment égale à la puissance électrique prévue pour le bâtiment, ne peut déclencher le fonctionnement de dispositifs consommateurs en énergie électrique tels que des moyens de chauffage ou de climatisation de bâtiment ou un ballon d'eau chaude ou une pompe à chaleur.

Cette situation pourrait être résolue en établissant une liaison de communication entre le dispositif de consommation intelligent et le gestionnaire d'énergie mais les protocoles de communication utilisés par les dispositifs de consommation intelligent sont variés voire propriétaires. Cette solution ne peut donc être retenue pour une implémentation à grande échelle.

Ainsi, l'occupant du bâtiment doit faire un choix entre recharger son véhicule électrique avec la puissance électrique du bâtiment et ne pas disposer d'un chauffage adéquat du bâtiment ou recharger son véhicule électrique avec des bornes de recharge autres que celle du bâtiment.

Cette situation n'est pas optimale pour la satisfaction et le bien-être de l'occupant du bâtiment.

### EXPOSE DE L'INVENTION

L'invention vise à garantir le confort d'un occupant d'un bâtiment comportant un dispositif de consommation intelligent et un gestionnaire d'énergie ainsi qu'une bonne répartition de la puissance électrique consommée.

Selon un premier aspect de l'invention, l'invention concerne un procédé de gestion de la puissance électrique consommée par un dispositif de consommation intelligent dans un bâtiment comportant le dispositif de consommation intelligent et un gestionnaire d'énergie, la puissance électrique étant au moins fournie par un réseau de fourniture d'énergie électrique par l'intermédiaire d'un compteur qui mesure la puissance électrique délivrée par le réseau de fourniture en énergie électrique au bâtiment et lorsque la puissance électrique est supérieure à celle prévue pour le bâtiment, provoque une interruption de la fourniture de l'énergie électrique au bâtiment, le dispositif de consommation intelligent étant apte à réduire sa puissance électrique consommée ou à augmenter sa puissance électrique consommée en fonction de la puissance électrique disponible avant qu'une interruption de la fourniture de l'énergie électrique au bâtiment n'apparaisse, le gestionnaire d'énergie étant apte à commander des dispositifs de consommation différents du dispositif de consommation intelligent en fonction de la puissance électrique disponible avant qu'une interruption de la fourniture de l'énergie électrique au bâtiment n'apparaisse, caractérisé en ce que le procédé comporte les étapes, exécutées par le dispositif de consommation intelligent, de :
- détermination de la puissance électrique disponible avant qu'une interruption de la fourniture de l'énergie électrique au bâtiment n'apparaisse,
- utilisation, pendant une première durée prédéterminée, de la valeur maximale de puissance électrique que peut fournir le compteur électrique avant une disjonction,
- utilisation, pendant une seconde durée prédéterminée, d'une puissance électrique inférieure à la valeur maximale de puissance électrique que peut fournir le compteur électrique avant une disjonction,
- réitération des étapes d'utilisation et de détermination à l'issue de la seconde période prédéterminée.

Corrélativement, l'invention concerne un dispositif de consommation intelligent dans un bâtiment comportant le dispositif de consommation intelligent et un gestionnaire d'énergie, la puissance électrique étant au moins fournie par un réseau de fourniture d'énergie électrique par l'intermédiaire d'un compteur qui mesure la puissance électrique délivrée par le réseau de fourniture en énergie électrique au bâtiment et lorsque la puissance électrique est supérieure à celle prévue pour le bâtiment, provoque une interruption de la fourniture de l'énergie électrique au bâtiment, le dispositif de consommation intelligent étant apte à réduire sa puissance électrique consommée ou à augmenter sa puissance électrique consommée en fonction de la puissance électrique disponible avant qu'une interruption de la fourniture de l'énergie électrique au bâtiment n'apparaisse, le gestionnaire d'énergie étant apte à commander des dispositifs de consommation différents du dispositif de consommation intelligent en fonction de la puissance électrique disponible avant qu'une interruption de la fourniture de l'énergie électrique au bâtiment n'apparaisse, caractérisé en ce que le dispositif de consommation intelligent comporte :
- des moyens de détermination de la puissance électrique disponible avant qu'une interruption de la fourniture de l'énergie électrique au bâtiment n'apparaisse,
- des moyens d'utilisation, pendant une première durée prédéterminée, de la valeur maximale de puissance électrique que peut fournir le compteur électrique avant une disjonction,
- des moyens d'utilisation, pendant une seconde durée prédéterminée, d'une puissance électrique inférieure à la valeur maximale de puissance électrique que peut fournir le compteur électrique avant une disjonction,
- des moyens de réactivations des moyens d'utilisation et de détermination à l'issue de la seconde période prédéterminée.

Ainsi, la présente invention permet au gestionnaire d'énergie de commander le fonctionnement de dispositifs de consommation et de prioriser ces dispositifs de consommation par rapport au dispositif de consommation intelligent. Ces dispositifs de consommation sont par exemple le chauffage, la climatisation, l'eau chaude sanitaire ou un appareil électroménager.

Selon un autre aspect de l'invention, le dispositif de consommation intelligent est une borne de recharge d'un véhicule électrique.

Ainsi, le confort de l'utilisateur est moins affecté par la consommation excessive du dispositif de consommation intelligent qui peut empêcher le démarrage des dispositifs de consommation commandé par le gestionnaire d'énergie.

Selon un autre aspect de l'invention, l'énergie électrique utilisée pendant la première période de temps est en outre fonction des caractéristiques de charge du véhicule.

Ainsi, il est possible de charger de manière la plus efficace possible, en fonction de la puissance maximale absorbée par le véhicule tout en tenant compte de la valeur maximale de puissance électrique que peut fournir le compteur électrique avant une disjonction. Selon un autre aspect de l'invention, l'énergie électrique utilisée pendant la seconde période de temps est en outre fonction des caractéristiques de charge du véhicule.

Ainsi, il est possible de charger le véhicule avec une puissance faible qui garantit une longévité de la borne de recharge et/ou du véhicule.

Selon un autre aspect de l'invention, l'utilisation, pendant la seconde durée prédéterminée, d'une puissance électrique inférieure à la puissance électrique que peut fournir le compteur électrique avant une disjonction est effectuée tant qu'une demande pour privilégier la recharge du véhicule n'est pas détectée.

Ainsi, le propriétaire du véhicule électrique peut charger son véhicule d'une façon prioritaire s'il en a besoin rapidement.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] représente une installation électrique dans un bâtiment dans lequel la présente invention est implémentée ;
[Fig. 2] représente un schéma bloc d'un dispositif de consommation intelligent selon la présente invention ;
[Fig. 3] représente un exemple d'algorithme exécuté par le dispositif de consommation intelligent selon la présente invention ;
[Fig. 4a] représente un exemple d'un chronogramme de la puissance électrique consommée par un dispositif de consommation intelligent.
[Fig. 4b] représente un exemple d'un chronogramme de la puissance électrique consommée par un gestionnaire d'énergie selon la présente invention.

### EXPOSE DETAILLE DE MODES DE REALISATION

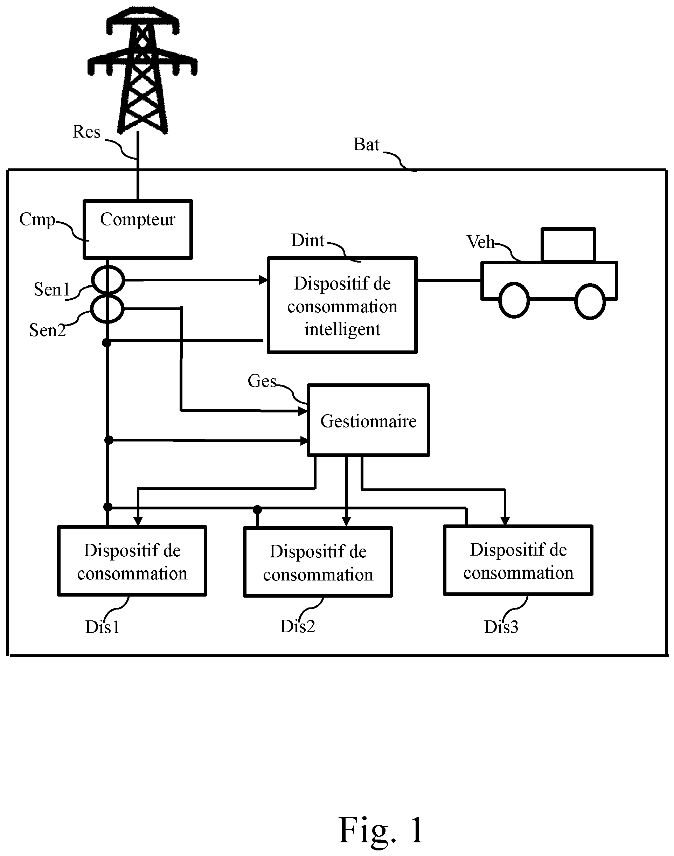

La **Fig. 1** représente une installation électrique dans un bâtiment dans lequel la présente invention est implémentée.

Le bâtiment Bat comporte un compteur électrique Cmp, un dispositif de consommation intelligent Dint, un gestionnaire d'énergie Ges et une pluralité de dispositifs de consommation Dis1, Dis2 et Dis3.

Le compteur électrique Cmp mesure la puissance électrique délivrée par un réseau Res de fourniture en énergie électrique au bâtiment et lorsque la puissance électrique mesurée est supérieure à celle prévue pour le bâtiment, provoque une disjonction. La disjonction n'est pas immédiate, celle-ci est effectuée au bout de quelques secondes ou dizaines de secondes après une mesure de surconsommation.

Le dispositif de consommation intelligent Dint est par exemple une borne de recharge d'un véhicule électrique Veh ou un système de climatisation ou une pompe à chaleur.

Le gestionnaire d'énergie Ges commande le fonctionnement des dispositifs de consommation Dis1, Dis2 et Dis3 en s'assurant que la puissance électrique délivrée par le compteur électrique Cmp soit inférieure à la puissance électrique prévue pour le bâtiment et prend en compte les différentes tarifications horaires de manière à réduire le coût financier de la facturation effectuée par l'opérateur du réseau de fourniture en énergie électrique.

Au gestionnaire d'énergie Ges, sont associés des moyens d'obtention de la puissance électrique délivrée par le compteur électrique Cmp.

Au dispositif de consommation intelligent Dint, sont associés des moyens d'obtention de la puissance électrique délivrée par le compteur électrique Cmp.

Les moyens d'obtention de la puissance électrique délivrée par le compteur électrique Cmp qui sont associés au dispositif de consommation intelligent Dint sont par exemple un capteur de courant Sen1.

Les moyens d'obtention de la puissance électrique délivrée par le compteur électrique Cmp qui sont associés au gestionnaire d'énergie Ges sont par exemple un capteur de courant Sen2.

La valeur de la tension électrique dans le bâtiment étant connue, une mesure de puissance électrique est équivalente à une mesure de courant.

Il est à remarquer ici que d'autres sources de fourniture en énergie électrique non représentées en Fig. 1 telles que des panneaux photovoltaïques, des éoliennes ou tout système de fourniture d'énergie électrique renouvelable peuvent fournir de l'énergie électrique au bâtiment.

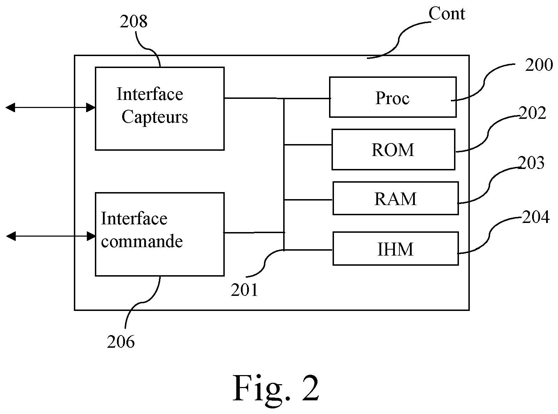

La **Fig. 2** représente un schéma bloc d'un dispositif de consommation intelligent selon la présente invention.

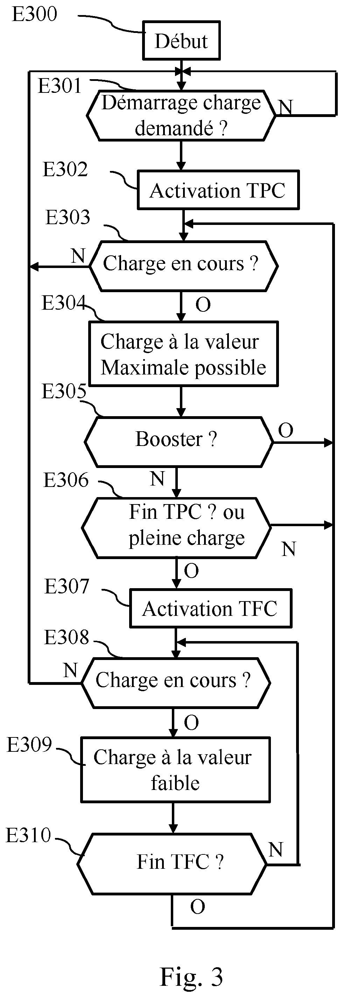

Le dispositif de consommation intelligent Dint est adapté à effectuer, à partir d'un ou plusieurs modules logiciels, les étapes de l'algorithme tel que décrit en référence à la Fig. 3.

Le dispositif de consommation intelligent Dint comporte un bus de communication 201 auquel sont reliés un processeur 200, une mémoire non volatile 202, une mémoire vive 203, éventuellement une interface homme machine IHM 204, une interface de commande 206 permettant la commande de la puissance électrique délivrée au véhicule Veh dans le cas où le dispositif de consommation intelligent Dint est une borne de recharge, et une interface capteurs 208 à laquelle est relié le capteur Sens 1.

L'interface homme machine 204 permet à l'occupant d'indiquer au dispositif de consommation intelligent Dint si celui-ci souhaite que la consommation en énergie électrique du dispositif de consommation intelligent Dint soit prioritaire.

La mémoire non volatile 202 mémorise le ou les modules logiciel(s) mettant en œuvre l'invention, ainsi que les données permettant de mettre en œuvre de l'algorithme tel que décrit en référence à la Fig. 3.

De manière plus générale, les programmes selon la présente invention sont mémorisés dans un moyen de stockage. Ce moyen de stockage est lisible par le microprocesseur 200. Ce moyen de stockage est intégré ou non au dispositif de consommation intelligent Dint, et peut être amovible.

Lors de la mise sous tension du dispositif de consommation intelligent Dint, le ou les modules logiciel(s) selon la présente invention est ou sont transféré(s) dans la mémoire vive 203 qui contient alors le code exécutable selon la présente invention ainsi que les données nécessaires à la mise en œuvre de l'invention.

Ainsi, tout ou partie de l'algorithme et étapes décrits ici peut être implémenté sous forme logicielle par exécution d'un ensemble d'instructions par une machine programmable, telle qu'un DSP (« Digital Signal Processor » en anglais) ou un microcontrôleur ou un processeur. Tout ou partie de l'algorithme et étapes décrits ici peut aussi être implémenté sous forme matérielle par une machine ou un composant (« chip » en anglais), tel qu'un FPGA (« Field-Programmable Gate Array » en anglais) ou un ASIC (« Application-Specific Integrated Circuit » en anglais). Ainsi, le dispositif de consommation intelligent Dint comporte de la circuiterie électronique adaptée et configurée pour implémenter les comportements, algorithmes et étapes décrits ici.

La **Fig. 3** représente un exemple d'algorithme exécuté par le dispositif de consommation intelligent selon la présente invention.

Le présent algorithme est décrit dans un exemple où le dispositif de consommation intelligent Dint est une borne de recharge d'un véhicule électrique.

A l'étape E300, le dispositif de consommation intelligent Dint lance l'exécution du présent algorithme.

A l'étape E301, le dispositif de consommation intelligent Dint vérifie si une consommation en énergie électrique par le dispositif de consommation intelligent Dint est demandée. La demande de consommation en énergie est par exemple détectée par une action sur l'interface IHM 204 ou par la détection du branchement d'un véhicule électrique Veh au dispositif de consommation intelligent Dint.

Dans l'affirmative, le dispositif de consommation intelligent Dint passe à l'étape E302. Dans la négative, le dispositif de consommation intelligent Dint retourne à l'étape E301. A l'étape E302, le dispositif de consommation intelligent Dint active un premier minuteur ou compteur TPC pour une première durée prédéterminée. La première durée prédéterminée est par exemple comprise entre 40 et 80 minutes, plus précisément autour de 60 minutes. A l'étape E303, le dispositif de consommation intelligent Dint vérifie si le dispositif de consommation intelligent délivre de l'énergie électrique au véhicule Veh.

Dans l'affirmative, le dispositif de consommation intelligent Dint passe à l'étape E304. Dans la négative, le dispositif de consommation intelligent Dint retourne à l'étape E301. A l'étape E304, le dispositif de consommation intelligent Dint commande la charge du véhicule Veh à la valeur maximale de puissance électrique que peut fournir le compteur Cmp avant une disjonction et en respectant les caractéristiques de charge du véhicule Veh. A l'étape E305, le dispositif de consommation intelligent Dint vérifie si demande pour privilégier une recharge du véhicule Veh est demandée. La demande est par exemple détectée par une action sur l'interface IHM 204.

Dans l'affirmative, le dispositif de consommation intelligent Dint retourne à l'étape E303. Dans la négative, le dispositif de consommation intelligent Dint passe à l'étape E306.

A l'étape E306, le dispositif de consommation intelligent Dint vérifie si le premier minuteur ou compteur est arrivé à la première durée prédéterminée ou si la charge du véhicule Veh est terminée.

Si le premier minuteur ou compteur est arrivé à la première durée prédéterminée ou si la charge du véhicule Veh est terminée, le dispositif de consommation intelligent Dint passe à l'étape E307. Dans la négative, le dispositif de consommation intelligent Dint retourne à l'étape E303.

A l'étape E307, le dispositif de consommation intelligent Dint active un second minuteur TFC ou compteur pour une seconde durée prédéterminée. La seconde durée prédéterminée est par exemple comprise entre 10 et 15 minutes, plus précisément de 13 minutes.

A l'étape E308, le dispositif de consommation intelligent Dint vérifie si le dispositif de consommation intelligent délivre de l'énergie électrique au véhicule Veh.

Dans l'affirmative, le dispositif de consommation intelligent Dint passe à l'étape E309. Dans la négative, le dispositif de consommation intelligent Dint retourne à l'étape E308. A l'étape E309, le dispositif de consommation intelligent Dint commande la charge du véhicule Veh à la valeur minimale de puissance électrique respectant les caractéristiques de charge du véhicule Veh.

A l'étape E310, le dispositif de consommation intelligent Dint vérifie si le second minuteur ou compteur est arrivé à la seconde durée prédéterminée.

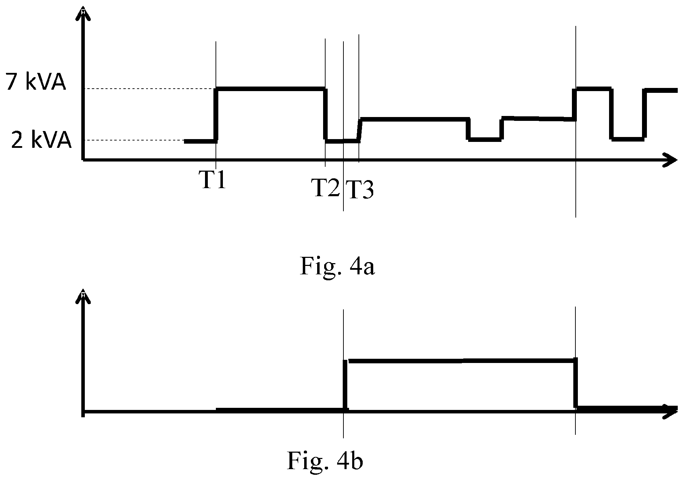

Dans l'affirmative, le dispositif de consommation intelligent Dint retourne à l'étape E303. Dans la négative, le dispositif de consommation intelligent Dint retourne à l'étape E308. Les **Figs. 4** représentent un exemple d'un chronogramme de la répartition de la puissance électrique consommée par un dispositif de consommation intelligent et un gestionnaire d'énergie selon la présente invention.

La Fig. 4a représente un exemple d'un chronogramme de la puissance électrique consommée par un dispositif de consommation intelligent.

A partir de l'instant T1 et jusqu'à l'instant T2, le dispositif de consommation intelligent consomme la valeur maximale de puissance électrique que peut fournir le compteur électrique avant une disjonction, par exemple consomme 7KVA.

La première durée prédéterminée est ainsi égale à T2-T1.

Pendant cette première durée prédéterminée, le dispositif de consommation intelligent détermine périodiquement la puissance maximale que peut fournir le compteur électrique avant une disjonction de manière à pouvoir prendre en compte des consommations électriques d'autres dispositifs que les dispositifs de consommation Dis1, Dis2 et Dis3.

A partir de l'instant T2 et jusqu'à l'instant T3, le dispositif de consommation intelligent consomme moins que la valeur maximale de puissance électrique que peut fournir le compteur électrique avant une disjonction, par exemple consomme 2KVA. Cette valeur est fonction des caractéristiques de charge du véhicule Veh.

La seconde durée prédéterminée est ainsi égale à T3-T2.

Pendant cette seconde durée prédéterminée, le dispositif de consommation intelligent détermine périodiquement la puissance maximale que peut fournir le compteur électrique avant une disjonction de manière à pouvoir prendre en compte des consommations électriques d'autres dispositifs que les dispositifs de consommation Dis1, Dis2 et Dis3.

La Fig. 4b représente un exemple d'un chronogramme de la puissance électrique consommée par un gestionnaire d'énergie selon la présente invention.

Pendant la première période de temps, le gestionnaire d'énergie Ges ne peut commander le fonctionnement des dispositifs de consommation Dis1 à Dis3 car le dispositif de consommation intelligent consomme la valeur maximale de puissance électrique que peut fournir le compteur électrique avant une disjonction.

Pendant la seconde période de temps, le gestionnaire d'énergie Ges détecte la disponibilité d'au moins une partie de la puissance électrique que peut fournir le compteur électrique avant une disjonction et commande le fonctionnement d'au moins un des dispositifs de consommation Dis1 à Dis3.

A partir de l'instant T3, le dispositif de consommation intelligent obtient la consommation en énergie électrique encore disponible (inférieure à celle entre les instants T1 et T2) et consomme la partie restant de l'énergie électrique que peut fournir le compteur électrique avant une disjonction tout en respectant les caractéristiques de charge du véhicule.

Bien entendu, la présente invention n'est nullement limitée aux modes de réalisation décrits ici, mais englobe, bien au contraire, toute variante à la portée de l'homme du métier.

## Revendications

1. Procédé de gestion de la puissance électrique consommée par un dispositif de consommation intelligent (Dint) dans un bâtiment comportant le dispositif de consommation intelligent (Dint) et un gestionnaire d'énergie (Ges), la puissance électrique étant au moins fournie par un réseau de fourniture d'énergie électrique par l'intermédiaire d'un compteur électrique (Cmp) qui mesure la puissance électrique délivrée par le réseau de fourniture en énergie électrique au bâtiment et, lorsque la puissance électrique est supérieure à celle prévue pour le bâtiment, provoque une interruption de la fourniture de l'énergie électrique au bâtiment, appelée disjonction,
le dispositif de consommation intelligent (Dint) étant apte à réduire sa puissance électrique consommée ou à augmenter sa puissance électrique consommée en fonction de la puissance électrique disponible avant qu'une dite disjonction n'apparaisse, le gestionnaire d'énergie (Ges) étant apte à commander des dispositifs de consommation différents du dispositif de consommation intelligent (Dint) en fonction de la puissance électrique disponible avant qu'une dite disjonction n'apparaisse, **caractérisé en ce que** le procédé comporte les étapes, exécutées par le dispositif de consommation intelligent (Dint), de :
- détermination (E303) de la puissance électrique disponible avant qu'une dite disjonction n'apparaisse,
- utilisation (E306), pendant une première durée prédéterminée, de la valeur maximale de puissance électrique que peut fournir le réseau de fourniture d'énergie électrique par l'intermédiaire du compteur électrique (Cmp) avant une dite disjonction,
- utilisation (E310), pendant une seconde durée prédéterminée, d'une puissance électrique inférieure à la valeur maximale de puissance électrique que peut fournir le réseau de fourniture d'énergie électrique par l'intermédiaire du compteur électrique (Cmp) avant une dite disjonction,
- réitération des étapes (E303, E306, E310) d'utilisation et de détermination à l'issue de la seconde période prédéterminée.

2. Procédé selon la revendication 1, **caractérisé en ce que** le dispositif de consommation intelligent (Dint) est une borne de recharge d'un véhicule électrique.

3. Procédé selon la revendication 2, **caractérisé en ce que** l'énergie électrique utilisée pendant la première période de temps est en outre fonction des caractéristiques de charge du véhicule.

4. Procédé selon la revendication 2 ou 3, **caractérisé en ce que** l'énergie électrique utilisée pendant la seconde période de temps est fonction des caractéristiques de charge du véhicule.

5. Procédé selon l'une quelconque des revendications 2 à 4, **caractérisé en ce que** l'utilisation, pendant la seconde durée prédéterminée, d'une puissance électrique inférieure à la puissance électrique que peut fournir le réseau de fourniture d'énergie électrique par l'intermédiaire du compteur électrique (Cmp) avant une dite disjonction est effectuée tant qu'une demande pour privilégier la recharge du véhicule n'est pas détectée.

6. Dispositif de consommation intelligent (Dint) dans un bâtiment comportant le dispositif de consommation intelligent (Dint) et un gestionnaire d'énergie (Ges), la puissance électrique étant au moins fournie par un réseau de fourniture d'énergie électrique par l'intermédiaire d'un compteur électrique (Cmp) qui mesure la puissance électrique délivrée par le réseau de fourniture en énergie électrique au bâtiment et, lorsque la puissance électrique est supérieure à celle prévue pour le bâtiment provoque une interruption de la fourniture de l'énergie électrique au bâtiment, appelée disjonction,
le dispositif de consommation intelligent (Dint) étant apte à réduire sa puissance électrique consommée ou à augmenter sa puissance électrique consommée en fonction de la puissance électrique disponible avant qu'une dite disjonction n'apparaisse, le gestionnaire d'énergie (Ges) étant apte à commander des dispositifs de consommation différents du dispositif de consommation intelligent (Dint) en fonction de la puissance électrique disponible avant qu'une dite disjonction n'apparaisse, **caractérisé en ce que** le dispositif de consommation intelligent (Dint) comporte :
- des moyens de détermination de la puissance électrique disponible avant qu'une dite disjonction n'apparaisse,
- des moyens d'utilisation, pendant une première durée prédéterminée, de la valeur maximale de puissance électrique que peut fournir le réseau de fourniture d'énergie électrique par l'intermédiaire du compteur électrique (Cmp) avant une dite disjonction,
- des moyens d'utilisation, pendant une seconde durée prédéterminée, d'une puissance électrique inférieure (Cmp) à la valeur maximale de puissance électrique que peut fournir le réseau de fourniture d'énergie électrique par l'intermédiaire du compteur électrique avant une dite disjonction,
- des moyens de réactivations des moyens d'utilisation et de détermination à l'issue de la seconde période prédéterminée.
